(19)

Europäisches Patentamt
European Patent Office
Office européen des brevets

(11) **EP 4 266 047 A1**

(12) **EUROPEAN PATENT APPLICATION**

(43) Date of publication:
**25.10.2023 Bulletin 2023/43**

(21) Application number: **23168567.8**

(22) Date of filing: **18.04.2023**

(51) International Patent Classification (IPC):
**$G01N\ 30/86$** (2006.01)    **$G01N\ 30/74$** (2006.01)

(52) Cooperative Patent Classification (CPC):
**G01N 30/8624;** G01N 30/74

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022 JP 2022069020**

(71) Applicant: **ARKRAY, Inc.**
**Kyoto-shi, Kyoto 601-8045 (JP)**

(72) Inventor: **ISHIKAWA, Kazuki**
**Kyoto, 602-0008 (JP)**

(74) Representative: **Dehns**
**St. Bride's House**
**10 Salisbury Square**
**London EC4Y 8JD (GB)**

(54) **CONTROL DEVICE, SEPARATION ANALYSIS DEVICE, SEPARATION ANALYSIS METHOD, AND NON-TRANSITORY STORAGE MEDIUM**

(57)    A control device (100) includes an acquiring unit (102) that performs chromatography on a sample containing a reference component and a component to be analyzed that is a first component or a second component to acquire a retention time of a reference peak, an index value, and a peak retention time of the component to be analyzed; and an identifying unit (103) that obtains the threshold based on a correlation stored in ROM, the acquired retention time of the reference peak, and the index value, and compares the threshold with the peak retention time of the component to be analyzed to identify whether a peak of the component to be analyzed is a first peak or a second peak.

FIG.8A SAMPLE 1

FIG.8B SAMPLE 2

FIG.8C SAMPLE 3

FIG.8D SAMPLE 4

**Description**

BACKGROUND

Technical Field

The present invention relates to a control device, a separation analysis device, a separation analysis method, and a non-transitory storage medium.

For example, Japanese Patent Application Laid-Open (JP-A) No. H1-079656 discloses a data processing device for a chromatograph that receives a chromatogram from chromatography, causes an A/D converter to convert the chromatogram into digital data, captures the digital data, and executes predetermined analysis processing. This data processing device for a chromatograph includes a recording means for plotting data to be captured, a peak detection means for detecting the peak of a chromatogram from the data, an allowable time width storage means for storing in advance the allowable time width of a peak for component identification, a means for determining whether or not the equivalent time of a detected peak value is within the allowable time width, and a means for recording a component name in the vicinity of the peak value of a recorded chromatogram of the recording means in a case in which the equivalent time is within the allowable time as a result of the determination.

Japanese Patent Application Laid-Open (JP-A) No. 2012-163476 discloses a method of determining the inclusion of a predetermined substance to be analyzed in an object to be measured with a gas chromatograph analyzer. This method uses a column capable of securing a target detection lower limit, calculates a correlation equation of a peak area and a retention time according to a sample load amount with respect to a substance to be analyzed from a result obtained by measuring a standard substance of the substance to be analyzed, obtains an area of a detection peak near a retention time at which a peak of the substance to be analyzed in a chromatogram obtained by analyzing the object to be measured can be detected, estimates a retention time at which the peak of the substance to be analyzed appears from the area of the detection peak by utilizing the correlation equation, and compares the estimated retention time with the retention time of the detection peak in the chromatogram of the object to be measured, to determine the inclusion of the substance to be analyzed in the object to be measured.

For various hemoglobins (hereinafter, also referred to as "Hb") in blood, components are identified and measured using the separation analysis method as described above. In particular, there is a high need for identification of major hemoglobin variants such as HbD, HbE, HbS, and HbC, and it is possible to identify them from the retention time of the peak.

However, in recent separation analysis devices for Hb, a period between peak retention times of Hb types is narrowed due to reduction in a measurement time. This makes it difficult to distinguish the peaks of Hb types having close peak retention times. For example, in a case in which HbD is analyzed by cation exchange chromatography, the peak retention time of HbD is close to the peak retention time of HbE. The peak of HbE may be detected within the allowable time width of the peak retention time of HbD, which makes it difficult to differentiate the peak of HbD and the peak of HbE from each other even in a case in which the allowable time width is set as in No. H1-079656. A sample concentration can be adjusted by an analyst in advance, but it is desirable that the sample can be measured in the state of blood because the operation is complicated.

SUMMARY

The present disclosure has been made in view of the above-described circumstances, and provides a control device, a separation analysis device, a separation analysis method, and a non-transitory storage medium capable of identifying a plurality of peaks having close peak retention times in a chromatogram without adjusting the sample concentration.

A control device according to an aspect of the invention is a control device of a separation analysis device that separates and analyzes a sample by chromatography, the control device including: a storing unit that stores a correlation among a retention time of a reference peak of a reference component, a threshold between a retention time of a first peak of a first component and a retention time of a second peak of a second component, and an index value representing an amount of a component in a sample, obtained by performing chromatography on a plurality of samples prepared in advance; an acquiring unit that performs chromatography on a sample containing the reference component and a component to be analyzed that is the first component or the second component to acquire the retention time of the reference peak, the index value, and a peak retention time of the component to be analyzed; and an identifying unit that obtains the threshold based on the correlation stored in the storing unit and the retention time of the reference peak and the index value acquired by the acquiring unit, and compares the threshold with the peak retention time of the component to be analyzed to identify whether a peak of the component to be analyzed is the first peak or the second peak.

A separation analysis device according to an aspect of the invention includes: a sample preparing unit for preparing a sample to be introduced into an analysis column; an analyzing unit including the analysis column for controlling adsorption and desorption of a component in the sample on a filler of the analysis column; a photometric unit for optically detecting the component contained in a desorbed liquid from the analysis column; and the control device (for example, the control device of the preceding aspect, optionally including any optional features thereof) to which each of the sample preparing unit, the analyzing unit, and the photometric unit is connected.

A separation analysis method according to an aspect of the invention includes: performing chromatography on a plurality of samples prepared in advance to acquire a correlation among a retention time of a reference peak of a reference component, a threshold between a retention time of a first peak of a first component and a retention time of a second peak of a second component, and an index value representing an amount of a component in the sample; performing chromatography on a sample containing the reference component and a component to be analyzed that is the first component or the second component to acquire the retention time of the reference peak, the index value, and a peak retention time of the component to be analyzed; determining the threshold based on the correlation, the acquired retention time of the reference peak, and the index value; and comparing the threshold with the peak retention time of the component to be analyzed to identify whether a peak of the component to be analyzed is the first peak or the second peak.

The separation analysis method may be carried out by the separation analysis device of the preceding aspect, optionally including any optional features thereof.

A non-transitory storage medium according to an aspect of the invention stores a separation analysis program that is executable by a computer to perform processing including: performing chromatography on a plurality of samples prepared in advance to acquire a correlation among a retention time of a reference peak of a reference component, a threshold between a retention time of a first peak of a first component and a retention time of a second peak of a second component, and an index value representing an amount of a component in the sample; performing chromatography on a sample containing the reference component and a component to be analyzed that is the first component or the second component to acquire the retention time of the reference peak, the index value, and a peak retention time of the component to be analyzed; determining the threshold based on the correlation, the acquired retention time of the reference peak, and the index value; and comparing the threshold with the peak retention time of the component to be analyzed to identify whether a peak of the component to be analyzed is the first peak or the second peak.

As described above, embodiments of the invention can identify a plurality of peaks having close retention times of peaks in a chromatogram without adjusting a sample concentration.

BRIEF DESCRIPTION OF THE DRAWINGS

Exemplary embodiments of the present invention will be described in detail based on the following figures, wherein:

Fig. 1 is a diagram illustrating the schematic configuration of an HPLC device using high performance liquid chromatography;
Fig. 2 is a block diagram illustrating the configuration example of a control system of the HPLC device;
Fig. 3 is a diagram illustrating an example of a chromatogram;
Fig. 4 is a diagram illustrating an example of a chromatogram including HbA0, HbE, and HbD;
Fig. 5 is a scatter diagram illustrating an example of a correlation between peak retention times created using a chromatogram;
Fig. 6 is a block diagram illustrating an example of the functional configuration of a control device according to an embodiment;
Fig. 7 is a flowchart illustrating an example of the flow of a correlation derivation processing by a separation analysis program according to an embodiment;
Fig. 8A is a scatter diagram illustrating an example of a correlation between peak retention times for each total peak area;
Fig. 8B is a scatter diagram illustrating an example of a correlation between peak retention times for each total peak area;
Fig. 8C is a scatter diagram illustrating an example of a correlation between peak retention times for each total peak area;
Fig. 8D is a scatter diagram illustrating an example of a correlation between peak retention times for each total peak area;
Fig. 9A is a diagram illustrating an example of an approximate expression obtained from the scatter diagram of Fig. 8A;
Fig. 9B is a diagram illustrating an example of an approximate expression obtained from the scatter diagram of Fig. 8B;
Fig. 9C is a diagram illustrating an example of an approximate expression obtained from the scatter diagram of Fig. 8C;
Fig. 9D is a diagram illustrating an example of an approximate expression obtained from the scatter diagram of Fig. 8D;

Fig. 10A is a diagram illustrating an example of an approximate expression of a slope and a total peak area (index value);

Fig. 10B is a diagram illustrating an example of an approximate expression of an intercept and a total peak area (index value); and

Fig. 11 is a flowchart illustrating an example of the flow of a peak identification processing by a separation analysis program according to an embodiment.

DETAILED DESCRIPTION

Hereinafter, examples of modes for carrying out the technique of the invention will be described in detail with reference to the drawings. Components and processing in which operations, actions, and functions have the identical working may have the same reference numerals throughout the drawings, and duplicate descriptions may be omitted, if appropriate. The respective drawings are merely schematically illustrated to the extent that the technique of the invention can be sufficiently understand. Therefore, the technique of the invention is not limited only to the illustrated examples. In the present embodiment, descriptions of configurations that are not directly related to the invention and well-known configurations may be omitted.

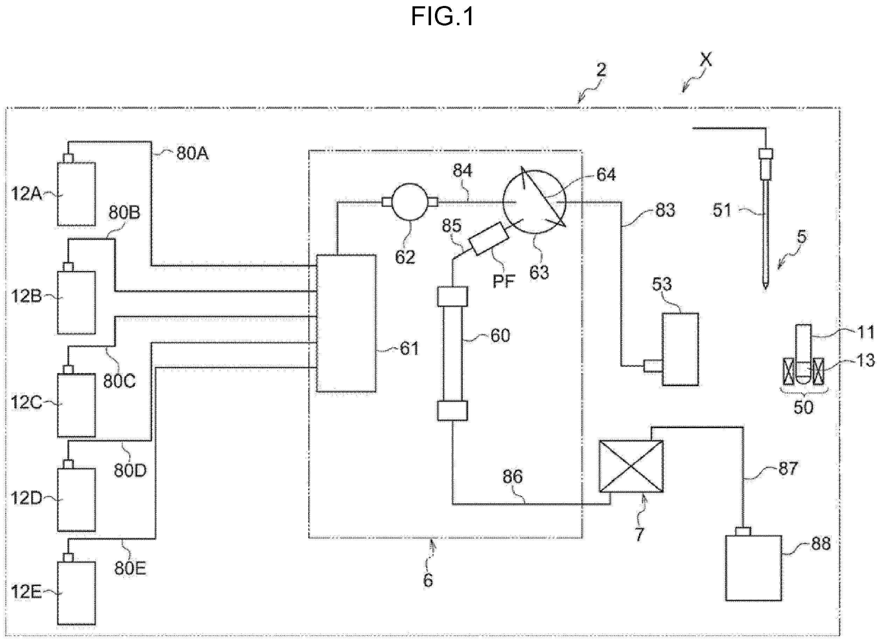

Fig. 1 is a diagram illustrating the schematic configuration of an HPLC device X using high performance liquid chromatography (HPLC). The HPLC device X is an example of a separation analysis device.

The HPLC device X is configured to automatically measure the concentration of glycohemoglobin (HbA1c) in whole blood in a state where a blood collection tube 11 is set. The HPLC device X includes a device main body 2 including a plurality of eluent bottles 12A, 12B, 12C, 12D, and 12E (5 in Fig. 1) and the like.

Each of the eluent bottles 12A to 12E holds each of eluents A to E to be supplied to an analysis column 60 to be described later. For example, the compositions, component ratios, pHs, and osmotic pressures and the like of the eluents are different depending on applications.

The device main body 2 includes a sample preparing unit 5, an analyzing unit 6, and a photometric unit 7.

The blood collection tube 11 is housed in, for example, a rack (not illustrated), and is configured to move to a position where blood of the blood collection tube 11 can be collected by a nozzle 51 in the sample preparing unit 5 to be described later.

The sample preparing unit 5 serves to prepare a sample to be introduced into an analysis column 60 from the blood collected from the blood collection tube 11. The sample preparing unit 5 includes a nozzle 51 and a dilution tank 53.

The nozzle 51 serves to collect various liquids including a blood sample 13 of the blood collection tube 11. The nozzle 51 can absorb and discharge the liquid and can be moved in a vertical direction and a horizontal direction. The operation of the nozzle 51 is controlled by a control device 100 to be described later.

The analyzing unit 6 serves to control the adsorption and desorption of biological components on a filler of the analysis column 60, and provides various biological components to the photometric unit 7. A set temperature in the analyzing unit 6 is, for example, about 40°C. The analysis column 60 holds a filler for selectively adsorbing hemoglobin in the sample. As the filler, for example, a methacrylic acid-methacrylic acid ester copolymer is used.

The analyzing unit 6 includes a manifold 61, a solution sending pump 62, and an injection valve 63 in addition to the analysis column 60.

The manifold 61 serves to selectively supply an eluent from a specific eluent bottle among the plurality of eluent bottles 12A to 12E to the analysis column 60. The manifold 61 is connected to each of the eluent bottles 12A, 12B, 12C, 12D, and 12E via pipes 80A to 80E, and is connected to the injection valve 63 via a pipe 84.

The solution sending pump 62 serves to apply power for moving the eluent to the injection valve 63, and is provided in the middle of the pipe 84.

The injection valve 63 can collect a predetermined amount of a sample for introduction and introduce the sample for introduction into the analysis column 60. The injection valve 63 includes a plurality of introduction ports and discharge ports (not illustrated). An injection loop 64 is connected to the injection valve 63. The injection loop 64 can hold a predetermined amount (for example, several μL) of liquid, and by switching the injection valve 63, if appropriate, it is possible to select a state where the injection loop 64 is communicated with the dilution tank 53 to supply the sample for introduction from the dilution tank 53 to the injection loop 64, or a state where the injection loop 64 is communicated with the analysis column 60 via a pipe 85 and a prefilter PF to introduce the sample for introduction from the injection loop 64 to the analysis column 60. As such an injection valve 63, for example, a hexagonal valve can be used. The prefilter PF is a filter for filtering the sample or the eluent.

The photometric unit 7 serves to optically detect hemoglobin contained in a desorbed liquid from the analysis column 60, and is connected to a waste liquid tank 88 for discharging the desorbed liquid from the analysis column 60 via a pipe 87.

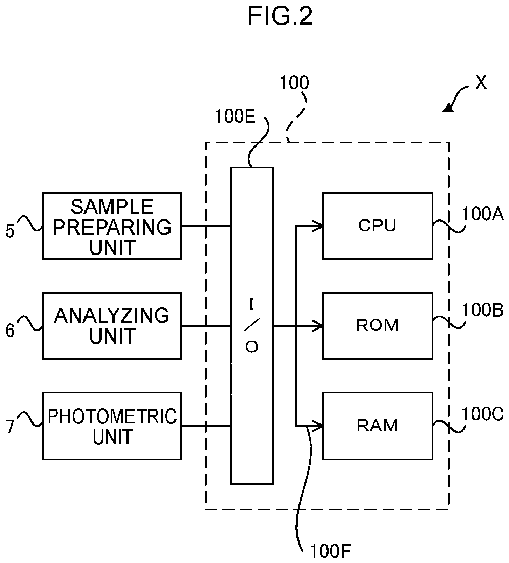

Fig. 2 is a block diagram illustrating the example configuration of a control system of the HPLC device X.

As illustrated in Fig. 2, the HPLC device X includes a control device 100. The control device 100 has a configuration in which a central processing unit (CPU) 100A, a read only memory (ROM) 100B, a random access memory (RAM) 100C, and an input/output interface (I/O) 100E are connected via a bus 100F. The HPLC device X includes an operation unit (not illustrated) that receives an input from an operator.

The sample preparing unit 5, the analyzing unit 6, and the photometric unit 7 are connected to the I/O 100E.

The eluent containing various hemoglobins discharged from the analysis column 60 is supplied to the photometric unit 7 via a pipe 86. This eluent is guided to the waste liquid tank 88 via the pipe 87.

In the photometric unit 7, the eluent is continuously irradiated with light, and the light reception result (absorbance) is output to the control device 100. The control device 100 calculates a chromatogram.

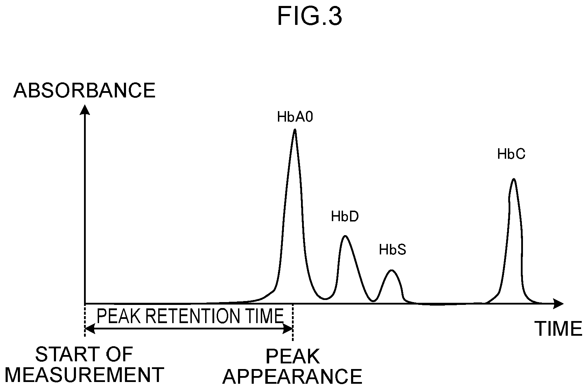

Fig. 3 is a diagram illustrating an example of a chromatogram. In Fig. 3, a horizontal axis represents an elapsed time from the start of measurement, and a vertical axis represents an absorbance.

As illustrated in Fig. 3, the chromatogram is represented as a graph showing a relationship between an elapsed time from the start of measurement and an absorbance as a light reception result. A position at which the peak of this chromatogram appears makes it possible to identify the detected hemoglobin (in the example of Fig. 3, HbA0, HbD, HbS, and HbC), and the integrated value of an absorbance at a peak portion (mountain portion), that is, the size of the area of the peak portion makes it possible to know the amount (concentration) of hemoglobin. HbA0 is a reference component because it has the largest peak among various hemoglobins and is easily identified. An elapsed time from the time point of the start of measurement to a time point at which the peak of each hemoglobin appears is referred to as a peak retention time (retention time).

In the present embodiment, a separation analysis program for executing a liquid chromatography measurement processing according to the present embodiment is stored in a ROM 100B in advance as an example. The CPU 100A writes and executes the separation analysis program stored in the ROM 100B in the RAM 100C. The separation analysis program may be stored in a storage medium such as a compact disc read only memory (CD-ROM), and executed by reading the separation analysis program with a CD-ROM drive or the like.

The separation analysis program may be installed in the control device 100 in advance, for example. The separation analysis program may be realized by being stored in a non-volatile non-transitory storage medium or distributed via a network line and installed or upgraded in the control device 100, if appropriate. As an example of the non-volatile non-transitory storage medium, a CD-ROM, a magneto-optical disk, a hard disk drive (HDD), a digital versatile disc read only memory (DVD-ROM), a flash memory, and a memory card and the like are assumed.

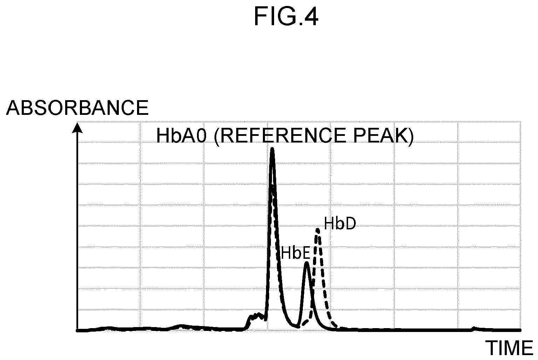

In the meantime, in a case in which HbD is analyzed by cation exchange chromatography, the peak retention time of HbA0, the peak retention time of HbE, and the peak retention time of HbD are as illustrated in Fig. 4 as examples.

Fig. 4 is a diagram illustrating an example of a chromatogram including HbA0, HbE, and HbD. In Fig. 4, the horizontal axis represents time, and the vertical axis represents absorbance.

As illustrated in Fig. 4, the peak of HbA0 can be easily identified, but it can be seen that the peak retention time of HbE is close to the peak retention time of HbD. Therefore, the similar peak retention times makes it difficult to differentiate the peak of HbD and the peak of HbE from each other.

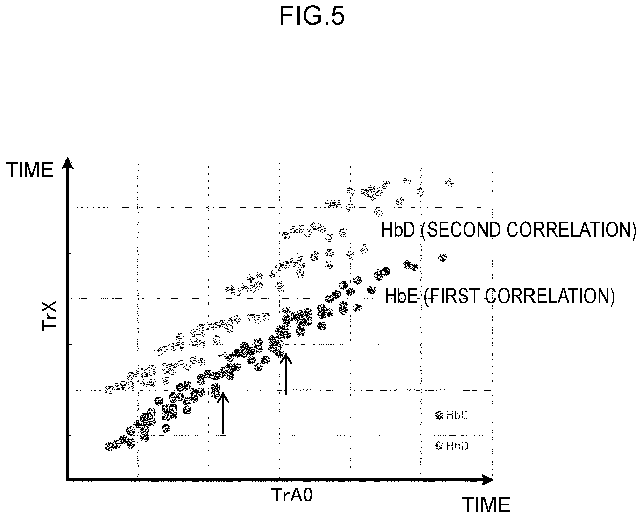

For example, a sample containing HbA0 and HbE and a sample containing HbA0 and HbD are prepared. Each of the samples are adjusted to various dilution concentrations, and each of the adjusted samples are measured. In a case in which a scatter diagram is created, in which the peak retention time of an HbA0 peak and the peak retention time of an HbD peak, and the peak retention time of an HbA0 peak and the peak retention time of an HbE peak appearing in each chromatogram obtained by the measurement are plotted for each chromatogram, the scatter diagram is as illustrated in Fig. 5. It can be read from Fig. 5 that the peak retention time of HbA0 and the peak retention time of HbE are correlated with each other, and the peak retention time of HbA0 and the peak retention time of HbD are correlated with each other.

In Fig. 5, a horizontal axis represents TrA0 which is the peak retention time of HbA0, and a vertical axis represents TrX which is the peak retention time of HbE or HbD. Fig. 5 is a scatter diagram created using chromatograms in which a total value obtained by summing all values representing the areas of the peaks of the chromatograms (a value representing the total area of all the peaks, hereinafter, also referred to as "Tarea") falls within a predetermined range (for example, 0 to 130,000). In Fig. 5, the correlation between the peak retention time of HbA0 and the peak retention time of HbE is referred to as a first correlation, and the correlation between the peak retention time of HbA0 and the peak retention time of HbD is referred to as a second correlation.

As illustrated in Fig. 5, HbE and HbD exhibit a constant trend, but overlapping portions are present as indicated by an arrow. Only the correlation with the HbA0 retention time causes difficult identification. In other words, even in a case in which a threshold between the peak retention time of the HbE peak and the peak retention time of the HbD peak is determined based on the peak retention time of the HbA0 peak, it is difficult to differentiate/distinguish the HbE peak and the HbD peak from each other. This is considered to be because the peak retention time is shifted depending on the amount of hemoglobin contained in the sample, which makes it difficult to identify HbE and HbD, which have close peak retention times to each other.

Meanwhile, the present inventors have found that in a case in which the threshold between the peak retention time of the HbE peak and the peak retention time of the HbD peak is determined based on the amount of hemoglobin in the sample and the peak retention time of the HbA0 peak, the peak of HbE and the peak of HbD having close peak retention times can be distinguished from each other. Hereinafter, as an example, HbA0 is described as a reference component, HbE is described as a first component of a component to be analyzed, and HbD is described as a second component of the component to be analyzed. In this case, the peak of HbA0 is referred to as a reference peak, the peak of HbE is referred to as a first peak, and the peak of HbD is referred to as a second peak. A sample to be analyzed is not limited to a sample containing hemoglobin, and any sample containing components having relatively close peak retention times can be applied.

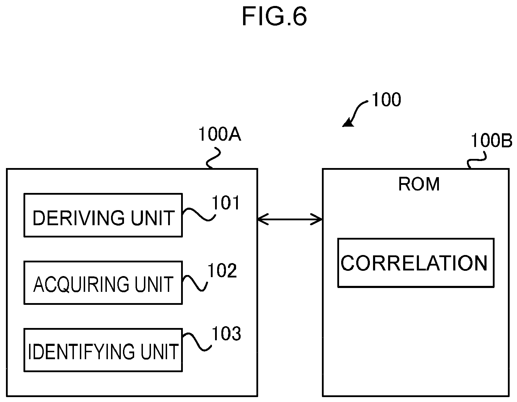

The CPU 100A of the control device 100 according to the present embodiment functions as each unit illustrated in Fig. 6 by writing the separation analysis program stored in the ROM 100B into the RAM 100C and executing the program.

Fig. 6 is a block diagram illustrating an example of the functional configuration of the control device 100 according to the present embodiment.

As illustrated in Fig. 6, the CPU 100A of the control device 100 according to the present embodiment functions as a deriving unit 101, an acquiring unit 102, and an identifying unit 103.

The deriving unit 101 derives a correlation determined by a reference peak retention time that is a retention time of a reference peak of HbA0, a threshold between a first peak retention time that is a retention time of a first peak (i.e. the peak of HbE) and a second peak retention time that is a retention time of a second peak (i.e. the peak of HbD), and an index value representing the amount of hemoglobin in the sample, obtained by performing chromatography on a plurality of samples prepared in advance. The correlation may be represented as a correlation equation or a correlation table. As the index value, any one of the area of all peaks (= Tarea), the area of the first peak (i.e. the peak of HbE), the area of the second peak (i.e. the peak of HbD), the area of the reference peak of HbA0, the height of the first peak (of HbE), the height of the second peak (of HbD), and the height of the reference peak of HbA0 in the chromatogram is used. These index values are obtained from the chromatogram.

The correlation equation or the correlation table is determined by, for example, a first correlation representing a correlation between the reference peak retention time and the first peak retention time, a second correlation representing a correlation between the reference peak retention time and the second peak retention time, and the index value. That is, the deriving unit 101 classifies the chromatogram for each index value, and derives a correlation equation or a correlation table for deriving a threshold used for identification of a peak of the component to be analyzed, using the reference peak retention time, the index value, and the threshold used for identification of the peak of the component to be analyzed as variables, from the first correlation and the second correlation appearing in the scatter diagram for each index value created by plotting the first peak retention time and the second peak retention time of each chromatogram. The correlation equation or the correlation table derived by the deriving unit 101 is stored in the ROM 100B. In a case in which the control device 100 includes the ROM 100B that stores a correlation equation or a correlation table having the reference peak retention time, the index value, and the threshold used to identify the peak of the component to be analyzed as variables, it is not necessary to include the deriving unit 101. For example, in a case in which the control device 100 is produced using the ROM in which the correlation equation or the correlation table is stored in advance, the deriving unit 101 can be omitted from the configuration of the control device 100. Here, an example of the correlation equation is shown in the following equation (1) (hereinafter, referred to as "correlation equation (1)"). The specific processing of generating the correlation equation (1) will be described later.

$$y = (c \times Tarea + d) \times TrA0 + (e \times Tarea + f) \qquad (1)$$

Here, y represents a threshold, Tarea represents a total peak area (index value), and TrA0 represents a peak retention time (reference peak retention time) of HbA0 as a reference peak. c, d, e, and f are constants obtained from the first correlation and the second correlation for each total peak area (index value).

The acquiring unit 102 performs chromatography on a sample to be analyzed to acquire a chromatogram. Specifically, the acquiring unit 102 controls the sample preparing unit 5, the analyzing unit 6, and the photometric unit 7 to perform chromatography. The acquiring unit 102 acquires an absorbance that is an optical measurement value output from the photometric unit 7, and creates a chromatogram using the acquired absorbance and an elapsed time from the start of measurement. The acquiring unit 102 acquires the reference peak retention time, the total peak area (index value), and the peak retention time of the component to be analyzed from the chromatogram. The sample here contains HbA0, which is an example of the reference component, and HbE or HbD, which is an example of the component to be analyzed. However, which of HbE and HbD is contained is unknown.

The identifying unit 103 identifies whether the peak of the component to be analyzed obtained from the chromatogram acquired by the acquiring unit 102 is the first peak (i.e. the peak of HbE) or the second peak (i.e. the peak of HbD) from the correlation stored in advance in the ROM 100B.

Specifically, as an example, the identifying unit 103 obtains a threshold corresponding to the reference peak retention time and the total peak area (index value) obtained from the chromatogram acquired by the acquiring unit 102 using the correlation equation (1), and compares the obtained threshold with the peak retention time of the component to be analyzed obtained from the chromatogram, thereby identifying whether the peak of the component to be analyzed is the first peak or the second peak. In the case of HbE and HbD, in a case in which the peak retention time of the component to be analyzed is smaller than the threshold, the component is identified as HbE, and in a case in which the peak retention time of the component to be analyzed is equal to or greater than the threshold, the component is identified as HbD.

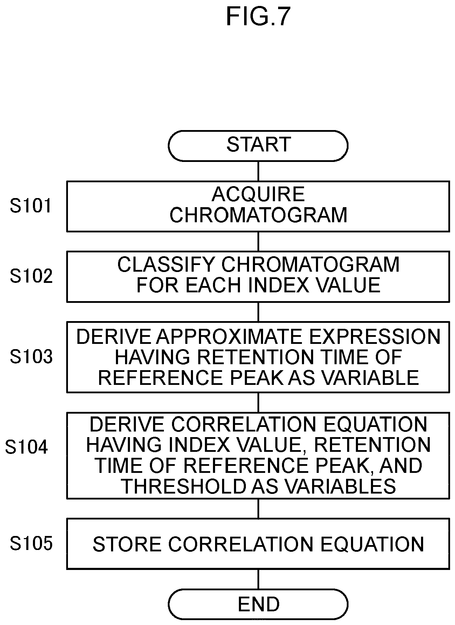

Next, the operation of the control device 100 according to the present embodiment will be described with reference to Figs. 7 to 11.

Fig. 7 is a flowchart illustrating an example of the flow of a correlation derivation processing by the separation analysis program according to the present embodiment. In the example of Fig. 7, the processing of generating the correlation equation (1) for identifying the two peaks of HbE and HbD will be specifically described.

The CPU 100A of the control device 100 writes the separation analysis program stored in the ROM 100B into the RAM 100C to cause the separation analysis program to execute the correlation derivation processing.

In step S101 of Fig. 7, the CPU 100A acquires a plurality of chromatograms used for generating the correlation equation (1).

Here, examples of an eluent and a specimen used for creating the chromatogram will be specifically described. As the eluent, the following eluents A, B, and C were prepared. The elution force of hemoglobin satisfies eluent A < eluent C < eluent B.

Eluent A: containing, as raw materials, sodium dihydrogen phosphate dihydrate having a concentration of 1.44% by weight and disodium hydrogen phosphate having a concentration of 0.16% by weight, and having a pH adjusted to 5.08.

Eluent B: containing, as raw materials, sodium dihydrogen phosphate dihydrate having a concentration of 0.02% by weight and disodium hydrogen phosphate having a concentration of 0.50% by weight, and having a pH adjusted to 8.0.

Eluent C: containing, as raw materials, sodium dihydrogen phosphate dihydrate having a concentration of 0.12% by weight and disodium hydrogen phosphate having a concentration of 0.33% by weight, and having a pH adjusted to 6.82.

As specimens, 22 blood specimens containing HbA0 and HbD but not containing HbE were prepared, and 19 blood specimens containing HbA0 and HbE but not containing HbD were prepared.

Next, the blood specimens prepared above are measured a plurality of times by the following procedure using the HPLC device X described above.

(S1) The eluent A is caused to flow through the device main body 2 to equilibrate the analysis column 60.

(S2) A predetermined amount of a hemolyzed blood specimen is introduced into the analysis column 60.

(S3) The eluent A is caused to flow for a predetermined time (for example, 13 seconds).

(S4) HbA0 is eluted by causing a liquid obtained by mixing the eluent A and the eluent C at a predetermined ratio (for example, 1: 9) to flow for a predetermined time (for example, 5 seconds).

(S5) The eluent C is caused to flow for a predetermined time (for example, 17 seconds) to elute HbA2, HbE, and HbD. The eluent B is caused to flow for a predetermined time (for example, 2 seconds) to elute all hemoglobins remaining in the analysis column 60.

(S6) The eluent A is caused to flow for a predetermined time (for example, 5 seconds).

(S7) A chromatogram is created from an absorbance obtained by the photometric unit 7 (optical detector) whose a detection wavelength is, for example, 420 nm.

(S8) The second peak derived from HbD, the first peak derived from HbE, and the reference peak derived from HbA0 are identified from the retention time of the peak appearing in the chromatogram and the size of the peak. Specifically, the second peak derived from HbD is a peak that appears at about 25 seconds. The first peak derived from HbE is a peak that appears at about 23 seconds. The reference peak derived from HbA0 is a peak that appears at about 19 seconds, and is a peak having the largest height or area of the peak.

(S9) The second peak retention time (TrHbD) derived from HbD, the reference peak retention time (TrA0) derived from HbA0, and the total peak area (Tarea) of the chromatogram are obtained for each specimen containing HbD and HbA0.

(S10) Similarly, the first peak retention time (TrHbE) derived from HbE, the reference peak retention time (TrA0) derived from HbA0, and the total peak area (Tarea) of the chromatogram are obtained for each specimen containing HbE and HbA0.

The total peak area (Tarea) of the chromatogram is used as an index of the amount of hemoglobin introduced into the analysis column 60, but the present invention is not limited thereto, and any value may be used as the index of the amount of hemoglobin introduced into the analysis column 60. For example, the area of the reference peak of HbA0 occupying a substantial amount of the total amount of hemoglobin, the area of the second peak (i.e. the peak of HbD) or the area of the first peak (i.e. the peak of HbE), which is variant hemoglobin occupying a certain amount of the total amount of hemoglobin, can be used. The height of the peak may be used instead of the area of the peak. The total peak area (Tarea) may be indirectly obtained by estimating the total peak area (Tarea) from the area of a specific peak correlated with the total peak area (Tarea).

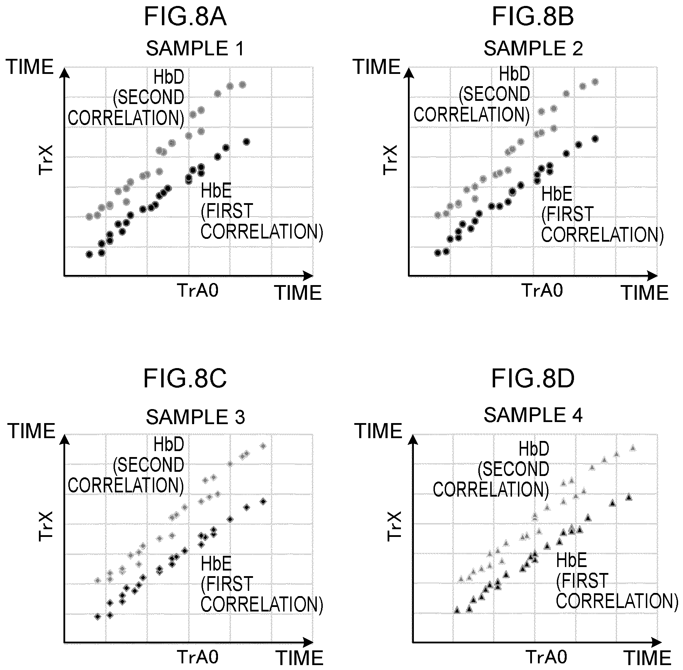

In step S102, the CPU 100A classifies the plurality of chromatograms acquired in step S101 for each size of the index value (for example, the total peak area Tarea). Specifically, as an example, as shown in Figs. 8A to 8D, the chromatograms are classified for each total peak area Tarea, and the first peak retention time and the second peak retention time of each chromatogram are plotted for each total peak area Tarea, thereby creating a scatter diagram for each total peak area Tarea.

Figs. 8A to 8D are scatter diagrams illustrating an example of a correlation between peak retention times for each total peak area Tarea. In Figs. 8A to 8D, a horizontal axis represents TrA0, and a vertical axis represents TrX (TrHbD and TrHbE).

Fig. 8A is a scatter diagram (sample 1) classifying the first correlation and the second correlation of the chromatogram in which the total peak area Tarea falls within a first range (for example, 90,001 to 130,000). Fig. 8B is a scatter diagram (sample 2) classifying the first correlation and the second correlation of the chromatogram in which the total peak area Tarea falls within a second range (for example, 60,001 to 90,000). Fig. 8C is a scatter diagram (sample 3) classifying the first correlation and the second correlation of the chromatogram in which the total peak area Tarea falls within a third range (for example, 30,001 to 60,000). Fig. 8D is a scatter diagram (sample 4) classifying the first correlation and the second correlation of the chromatogram in which the total peak area Tarea falls within a fourth range (for example, 0 to 30,000). An example of the range of the total peak area Tarea is a value representing an area obtained from the chromatogram. The average value of the Tarea of the chromatograms used in the scatter diagram of Fig. 8A is 117,517. The average value of the Tarea of the chromatograms used in the scatter diagram of Fig. 8B is 77,826. The average value of the Tarea of the chromatograms used in the scatter diagram of Fig. 8C is 38,936. The average value of the Tarea of the chromatograms used in the scatter diagram of Fig. 8D is 11,027.

As illustrated in Figs. 8A to 8D, it can be seen that HbE and HbD can be clearly distinguished from each other in any scatter diagram. That is, in a case in which the threshold between the first peak retention time TrHbE and the second peak retention time TrHbD is set according to the total peak area Tarea and the reference peak retention time TrA0, it is considered that the first peak derived from HbE and the second peak derived from HbD can be distinguished from each other.

In step S103, the CPU 100A derives an approximate expression having the reference peak retention time TrA0 as a variable. Specifically, as an example, an approximate expression capable of differentiating the first correlation and the second correlation from each other is derived for each scatter diagram of Figs. 8A to 8D described above. An example of the approximate expression is shown in the following expression (2). The approximate expression is an example of the first correlation equation.

$$y = a \times \mathrm{TrA0} + b \quad (2)$$

Here, y represents a threshold between the first peak retention time TrHbE and the second peak retention time TrHbD, TrA0 represents the reference peak retention time, a is a constant indicating a slope, and b is a constant indicating an intercept.

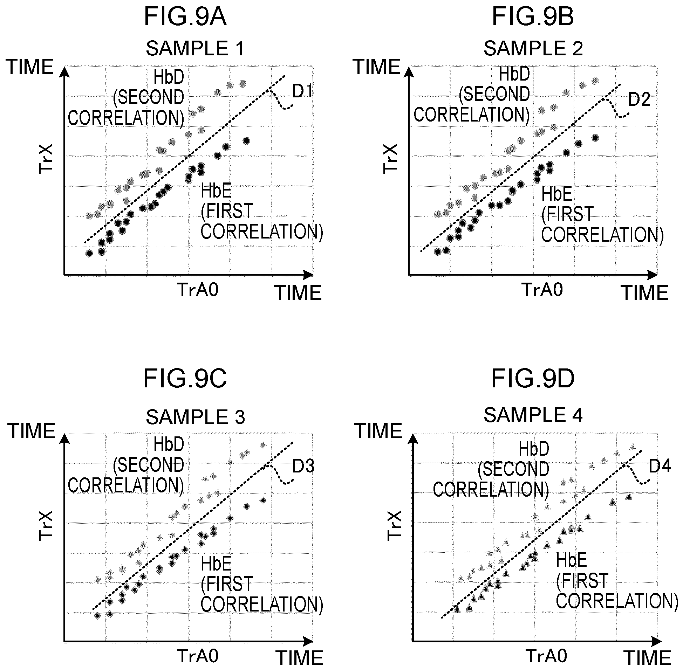

As an example, as illustrated in Figs. 9A to 9D, the slope a and the intercept b are set by appropriately adjusting the expression (2) that is an expression of a linear function of the threshold y and the reference peak retention time TrA0.

Figs. 9A to 9D are diagrams illustrating examples of approximate expressions obtained from the scatter diagrams of Figs. 8A to 8D.

The approximate expression D1 illustrated in Fig. 9A is obtained from the scatter diagram of Fig. 8A (average value of Tarea = 117,517), and is, for example, as follows.

$$y = 2.4 \times \mathrm{TrA0} - 22$$

The approximate expression D2 illustrated in Fig. 9B is obtained from the scatter diagram of Fig. 8B (average value of Tarea = 77,826), and is, for example, as follows.

$$y = 2.3 \times TrA0 - 20.1$$

The approximate expression D3 illustrated in Fig. 9C is obtained from the scatter diagram of Fig. 8C (average value of Tarea =38,936), and is, for example, as follows.

$$y = 2.2 \times TrA0 - 18.5$$

The approximate expression D4 illustrated in Fig. 9D is obtained from the scatter diagram of Fig. 8D (average value of Tarea= 11,027), and is, for example, as follows.

$$y = 2.12 \times TrA0 - 17.35$$

Table 1 below summarizes a correspondence relationship among the average value of Tarea, the slope a, and the intercept b for the above approximate expressions D1 to D4.

(Table 1)

| Approximate expression | Average value of Tarea | Slope a | Intercept b |
|---|---|---|---|
| D1 | 117517 | 2.4 | -22 |
| D2 | 77826 | 2.3 | -20.1 |
| D3 | 38936 | 2.2 | -18.5 |
| D4 | 11027 | 2.12 | -17.35 |

The function need not be a linear function as long as the function can identify the first peak retention time TrHbE and the second peak retention time TrHbD from each other. For example, a function that can distinguish/differentiate the first peak retention time TrHbE and the second peak retention time TrHbD from each other may be derived by appropriately adjusting the coefficients of a quadratic function or a cubic function.

In the present example, in order to obtain the linear function that can differentiate the first peak retention time TrHbE and the second peak retention time TrHbD from each other, the slope a and the intercept b were set by appropriate adjustment. As another method, for example, a first approximate expression of the first peak retention time TrHbE of HbE and the reference peak retention time TrA0 of HbA0 is obtained by the following expression.

$$TrHbE = g \times TrA0 + h$$

A second approximate expression of the second peak retention time TrHbD of HbD and the reference peak retention time TrA0 of HbA0 is obtained by the following expression.

$$TrHbD = j \times TrA0 + k$$

A linear function may be obtained, in which the average value of a slope g of the first approximate expression and a slope j of the second approximate expression is a slope "(g + j)/2" and the average value of an intercept h of the first approximate expression and a slope k of the second approximate expression is an intercept "(h + k)/2". Also in this method, a linear function that can distinguish the first peak retention time TrHbE and the second peak retention time TrHbD from each other can be similarly derived.

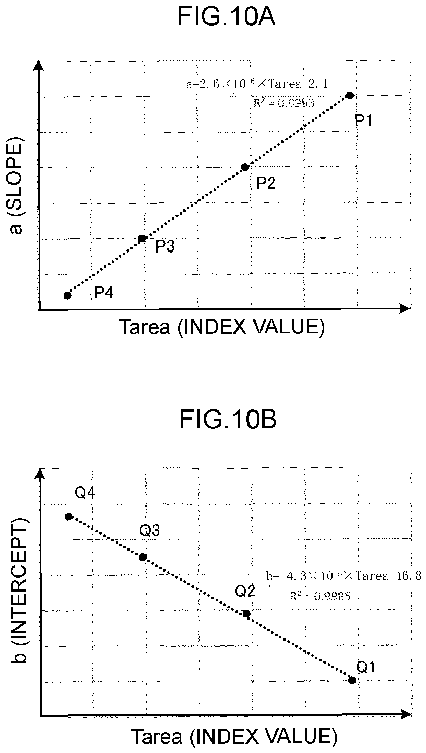

Next, in step S104, the CPU 100A derives the correlation equation (1) having the total peak area Tarea (index value), the reference peak retention time TrA0, and the threshold of the retention time used to distinguish the first peak and the second peak from each other as variables. Specifically, as an example, as illustrated in Figs. 10A and 10B, an approximate expression of the slope a and the total peak area Tarea (index value) and an approximate expression of the intercept b and the total peak area Tarea (index value) are created. The approximate expressions are examples of a second correlation equation.

Fig. 10A is a diagram illustrating an example of an approximate expression of the slope a and the total peak area Tarea (index value). Fig. 10B is a diagram illustrating an example of an approximate expression of the intercept b and the total peak area Tarea (index value).

The approximate expression illustrated in Fig. 10A is obtained by plotting a set of (average value of Tarea, slope a) obtained from each of the scatter diagrams of Figs. 9A to 9D described above. That is, a point P1 indicates (117517, 2.4), a point P2 indicates (77826, 2.3), a point P3 indicates (38936, 2.2), and a point P4 indicates (11027, 2.12). The approximate expression illustrated in Fig. 10A is represented by the following expression (3).

$$a = c \times Tarea + d \quad (3)$$

However, a slope c is a constant, and for example, $c = 2.6 \times 10^{-6}$ is set. An intercept d is a constant, for example, d = 2.1 is set.

Similarly, the approximate expression illustrated in Fig. 10B is obtained by plotting a set of points having coordinates (average value of Tarea, intercept b) obtained from each of the scatter diagrams of Figs. 9A to 9D described above. That is, a point Q1 indicates (117517, -22), a point Q2 indicates (77826, -20.1), a point Q3 indicates (38936, -18.5), and a point Q4 indicates (11027, -17.35). The approximate expression illustrated in Fig. 10B is represented by the following expression (4).

$$b = e \times Tarea + f \quad (4)$$

However, a slope e is a constant, and for example, $e = -4.3 \times 10^{-5}$ is set. An intercept f is a constant, and for example, f = -16.8 is set.

In a case in which the expression (3) and the expression (4) are substituted into the expression (2) described above, the correlation equation (1) described above is obtained. That is,

$$y = (c \times Tarea + d) \times TrA0 + (e \times Tarea + f)$$
$$= (2.6 \times 10^{-6} \times Tarea + 2.1) \times TrA0 + (-4.3 \times 10^{-5} \times Tarea - 16.8) \quad (1)$$

is derived. Here, y represents a threshold between the first peak retention time TrHbE and the second peak retention time TrHbD, Tarea represents an area value of the total peak area, and TrA0 represents the reference peak retention time. c, d, e, and f are constants.

In the above description, the reference peak derived from the HbA0 component contained in the blood specimen was used as the reference peak as an index of the fluctuation of the threshold due to causes (for example, a change in an environmental temperature, and the like) other than the difference in the amount of hemoglobin introduced into the analysis column 60, and the reference peak retention time TrA0 was used as the function of the correlation equation of the threshold y.

A peak other than HbA0 may be used as long as the peak is detectable by the chromatography and derived from the component contained in the specimen.

In the present example, the chromatogram was divided for each size of the total peak area Tarea, and a scatter diagram was created, in which the reference peak retention time TrA0 was plotted on a horizontal axis and TrX, which is the first peak retention time TrHbE and the second peak retention time TrHbD, was plotted on a vertical axis. A correlation equation using the threshold y, the reference peak retention time TrA0, and the total peak area Tarea (index value) as functions was obtained.

As another method, the chromatogram may be divided for each size of the reference peak retention time TrA0 to create a scatter diagram in which the total peak area Tarea is plotted on a horizontal axis and TrX, which is the first peak retention time TrHbE and the second peak retention time TrHbD, is plotted on a vertical axis. In this case, a correlation equation using the threshold y, the reference peak retention time TrA0, and the total peak area Tarea (index value) as functions can be obtained.

Specifically, the correlation equation is determined by a first correlation representing a correlation between the total peak area Tarea (index value) and the first peak retention time TrHbE, a second correlation representing a correlation between the total peak area Tarea (index value) and the second peak retention time TrHbD, and the reference peak retention time TrA0. That is, from the result of classifying the first correlation and the second correlation for each size of the reference peak retention time TrA0, an approximate expression (for example, y = l $\times$ Tarea + m) of the threshold y and the total peak area Tarea (index value) of the first peak retention time TrHbE and the second peak retention time TrHbD is obtained for each size of the reference peak retention time TrA0. From the correlation equation (for example, l = n $\times$ TrA0 + o) of the reference peak retention time TrA0 and l, the correlation equation (for example, m = p $\times$ TrA0 + q) of the reference peak retention time TrA0 and m, and the approximate equation (for example, y = 1 $\times$ Tarea + m) of the threshold y and the total peak area Tarea (index value), a correlation equation (y = (n $\times$ TrA0 + o) $\times$ Tarea + (p $\times$ TrA0 + q)) for deriving the threshold y used for identifying the peak of the component to be analyzed is derived using the reference peak retention time TrA0, the total peak area Tarea (index value), and the threshold y used for identifying the peak of the component to be analyzed as variables. In order to obtain the approximate expressions shown in Figs. 10A and 10B, for example, an average value of the reference peak retention time TrA0 may be adopted.

A three-dimensional plot including three axes of the total peak area Tarea (index value), the reference peak retention time TrA0, and TrX that is the first peak retention time TrHbE and the second peak retention time TrHbD may be created, and a correlation equation using the threshold y, the reference peak retention time TrA0, and the total peak area Tarea (index value) as functions may be obtained.

Next, in step S105, the CPU 100A stores the correlation equation (1) derived in step S104 in the ROM 100B, and ends a series of correlation derivation processing by the separation analysis program.

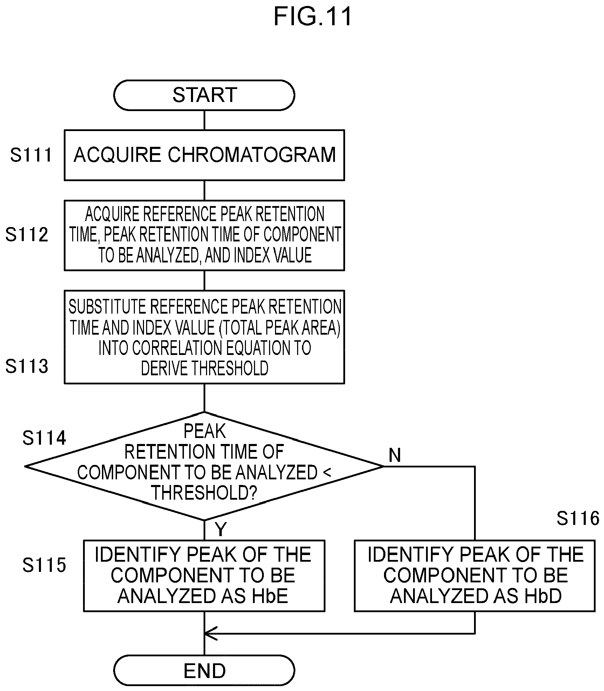

Next, the peak identification processing of the control device 100 according to the present embodiment will be described with reference to Fig. 11. As a matter of course, the index value used in the peak identification processing is the same as the index value used in the correlation derivation processing described above. That is, in a case in which the total peak area Tarea is used in the correlation derivation processing, the total peak area Tarea is also used in the peak identification processing.

Fig. 11 is a flowchart illustrating an example of the flow of a peak identification processing by a separation analysis program according to the present embodiment. In the peak identification processing, in a case in which an unknown peak Xp is eluted at a position where HbE or HbD is eluted, whether the unknown peak Xp is the first peak (i.e. the peak of HbE) or the second peak (i.e. the peak of HbD) is identified. In the example of Fig. 11, the processing of identifying the peak will be specifically described using the correlation equation (1) for distinguishing the first peak (i.e. the peak of HbE) and the second peak (i.e. the peak of HbD) from each other.

The peak identification processing by the separation analysis program is executed by the CPU 100A of the control device 100 writing the separation analysis program stored in the ROM 100B into the RAM 100C.

In step S111 of Fig. 11, the CPU 100A acquires a chromatogram obtained by performing chromatography on a sample to be analyzed. The sample here contains HbA0, which is an example of the reference component, and HbE or HbD, which is an example of the component to be analyzed. However, which of HbE and HbD is contained is unknown.

In step S112, the CPU 100A acquires the reference peak retention time TrA0, the peak retention time (that is, the retention time of the unknown peak Xp) of the component to be analyzed (HbE or HbD), and the total peak area Tarea as the index value from the chromatogram acquired in step S111.

In step S113, the CPU 100A substitutes the reference peak retention time TrA0 and the total peak area Tarea (index value) acquired in step S112 into the correlation equation (1) to derive the threshold y.

In step S114, the CPU 100A determines whether or not the peak retention time of the component to be analyzed (HbE or HbD) acquired in step S112 is smaller than the threshold y. In a case in which the CPU 100A determines that the peak retention time of the component to be analyzed (HbE or HbD) is shorter than the threshold y (in the case of positive determination), the processing proceeds to step S115. In a case in which the CPU 100A determines that the peak retention time of the component to be analyzed (HbE or HbD) is equal to or longer than the threshold y (in the case of negative determination), the processing proceeds to step S116.

In step S115, the CPU 100A identifies the peak of the component to be analyzed as the first peak of (i.e. the peak of HbE), and ends a series of peak identification processes performed by the separation analysis program.

In step S116, the CPU 100A identifies the peak of the component to be analyzed as the second peak (i.e. the peak of HbD), and ends a series of peak identification processes performed by the separation analysis program.

In the above description, the total peak area Tarea is used as the index value, but the peaks can be similarly identified by using other index values.

For example, in a case in which the area of the first peak (i.e. the peak of HbE) or the second peak (i.e. the peak of HbD) is used as the index value, in the correlation derivation processing described above, the constants c, d, e, and f may be obtained based on the reference peak retention time TrA0 and the area of the first peak (i.e. the peak of HbE) or the second peak (i.e. the peak of HbD), and the reference peak retention time TrA0, the threshold, and the area of the first peak (i.e. the peak of HbE) or the second peak (i.e. the peak of HbD) may be used as variables of the correlation equation.

In this case, in the peak identification processing, the reference peak retention time TrA0, the peak retention time (that is, the retention time of the unknown peak Xp) of the component to be analyzed (HbE or HbD), and the area (that is, the area of the unknown peak Xp) of the peak of the component to be analyzed (HbE or HbD) as the index value are acquired from the chromatogram. The acquired reference peak retention time TrA0 and the area (index value) of the peak of the component to be analyzed (HbE or HbD) are substituted into the correlation equation to derive a threshold. The peak retention time of the component to be analyzed (HbE or HbD) is compared with the threshold.

In the case of using the area of the reference peak of HbA0 as the index value, in the correlation derivation processing described above, the constants c, d, e, and f may be obtained based on the reference peak retention time TrA0 and the area of the reference peak of HbA0, and the reference peak retention time TrA0, the threshold, and the area of the reference peak of HbA0 may be used as variables of the correlation equation.

In this case, in the peak identification processing, the reference peak retention time TrA0, the peak retention time (that is, the retention time of the unknown peak Xp) of the component to be analyzed (HbE or HbD), and the area of the reference peak of HbA0 as the index value are acquired from the chromatogram. The acquired reference peak retention time TrA0 and the area (index value) of the reference peak of HbA0 are substituted into the correlation equation to derive a threshold. The peak retention time of the component to be analyzed (HbE or HbD) is compared with the threshold.

In a case in which the height of the first peak (i.e. the peak of HbE) or the second peak (i.e. the peak of HbD) is used as the index value, in the correlation derivation processing described above, the constants c, d, e, and f may be obtained based on the reference peak retention time TrA0 and the height of the first peak (i.e. the peak of HbE) or the second peak (i.e. the peak of HbD), and the reference peak retention time TrA0, the threshold, and the height of the first peak (i.e. the peak of HbE) or the second peak (i.e. the peak of HbD) may be used as variables of the correlation equation.

In this case, in the peak identification processing, the reference peak retention time TrA0, the peak retention time (that is, the retention time of the unknown peak Xp) of the component to be analyzed (HbE or HbD), and the height (that is, the height of the unknown peak Xp) of the peak of the component to be analyzed (HbE or HbD) as the index value are acquired from the chromatogram. The acquired reference peak retention time TrA0 and the height (index value) of the peak of the component to be analyzed (HbE or HbD) are substituted into the correlation equation to derive a threshold. The peak retention time of the component to be analyzed (HbE or HbD) is compared with the threshold.

In the case of using the height of the reference peak of HbA0 as the index value, in the correlation derivation processing described above, the constants c, d, e, and f may be obtained based on the reference peak retention time TrA0 and the height of the reference peak of HbA0, and the reference peak retention time TrA0, the threshold, and the height of the reference peak of HbA0 may be used as variables of the correlation equation.

In this case, in the peak identification processing, the reference peak retention time TrA0, the peak retention time (that is, the retention time of the unknown peak Xp) of the component to be analyzed (HbE or HbD), and the height of the reference peak of HbA0 as the index value are acquired from the chromatogram. The acquired reference peak retention time TrA0 and the height (index value) of the reference peak of HbA0 are substituted into the correlation equation to derive a threshold. The peak retention time of the component to be analyzed (HbE or HbD) is compared with the threshold.

As described above, according to the present embodiment, focusing on the fact that in a case in which the threshold between the peak retention time of the HbE peak and the peak retention time of the HbD peak is determined based on the amount of hemoglobin in the sample and the peak retention time of the HbA0 peak, the peak of HbE and the peak of HbD having close peak retention times can be differentiated/distinguished from each other, the correlation determined by the reference peak retention time of HbA0, the first peak retention time of HbE, the second peak retention time of HbD, and the index value representing the amount of hemoglobin in the sample is used. As a result, the peak of HbE and the peak of HbD, which have close peak retention times and are difficult to identify, can be differentiated/distinguished from each other without adjusting the sample concentration.

The present invention is not limited to the above-described embodiment, and various modifications can be made. For example, the present invention can be applied not only to an HPLC device for measuring a hemoglobin concentration in blood but also to a case of using a specimen other than blood, a case of measuring components other than the hemoglobin concentration, or a liquid chromatography device other than the HPLC device.

The control device according to the embodiment has been described above as an example. The embodiments may be in the form of programs for causing a computer to execute the functions of the respective units included in the control device. The embodiments may be in the form of a non-temporary storage medium that can be read by the computer that stores these programs.

The configuration of the control device described in the above embodiments is an example, and may be changed depending on the situation without departing from the scope of the invention as defined by the appended claims.

The flow of the processing of the program described in the above embodiments is also an example, and unnecessary steps may be deleted, new steps may be added, or the processing order may be changed without departing from the scope of the invention as defined by the appended claims.

In the above-described embodiments, the case in which the processing according to the embodiments is realized by the software configuration using the computer by executing the program has been described, but the invention is not limited thereto. The embodiments may be realized by, for example, a hardware configuration or a combination of the hardware configuration and the software configuration.

## Claims

1. A control device (100) for a separation analysis device (X) that separates and analyzes a sample by chromatography, the control device comprising:

   a storing unit (100B) that is configured to store a correlation among a retention time of a reference peak of a reference component, a threshold between a retention time of a first peak of a first component and a retention time of a second peak of a second component, and an index value representing an amount of a component in a sample, that are obtained by performing chromatography on a plurality of samples prepared in advance;
   an acquiring unit (102) that is configured to perform chromatography on a sample containing the reference component and a component to be analyzed that is the first component or the second component to acquire the retention time of the reference peak, the index value, and a peak retention time of the component to be analyzed; and
   an identifying unit (103) that is configured to obtain the threshold based on the correlation stored in the storing unit and the retention time of the reference peak and the index value acquired by the acquiring unit, and is configured to compare the threshold with the peak retention time of the component to be analyzed to identify whether a peak of the component to be analyzed is the first peak or the second peak.

2. The control device according to claim 1, wherein the correlation is determined by a first correlation representing a correlation between the retention time of the reference peak and the retention time of the first peak, a second correlation representing a correlation between the retention time of the reference peak and the retention time of the second peak, the threshold, and the index value.

3. The control device according to claim 2, wherein the correlation is represented as a correlation equation or a correlation table for deriving a threshold used for identification of the peak of the component to be analyzed from the first correlation and the second correlation for each index value, with the retention time of the reference peak, the threshold, and the index value as variables.

4. The control device according to claim 1, wherein the correlation is determined by a first correlation representing a correlation between the index value and the retention time of the first peak, a second correlation representing a correlation between the index value and the retention time of the second peak, the threshold, and the retention time of the reference peak.

5. The control device according to claim 4, wherein the correlation is represented as a correlation equation or a correlation table for deriving a threshold used for identification of the peak of the component to be analyzed from the first correlation and the second correlation for each retention time of the reference peak, with the retention time of the reference peak, the threshold, and the index value as variables.

6. The control device according to any of claims 1 to 5, wherein the index value is any one of an area of all peaks, an area of the first peak, an area of the second peak, an area of the reference peak, a height of the first peak, a height of the second peak, and a height of the reference peak, which are obtained by performing the chromatography.

7. The control device according to any of claims 1 to 6, wherein the sample contains hemoglobin, the reference component is HbA0, the first component is HbE, and the second component is HbD.

8. A separation analysis device (X) comprising:

   a sample preparing unit (5) for preparing a sample to be introduced into an analysis column;
   an analyzing unit (6) including the analysis column for controlling adsorption and desorption of a component in the sample on a filler of the analysis column;

a photometric unit (7) for optically detecting the component contained in a desorbed liquid from the analysis column; and

the control device (100) according to any of claims 1 to 7, to which each of the sample preparing unit, the analyzing unit, and the photometric unit are connected.

9. A separation analysis method comprising:

performing chromatography on a plurality of samples prepared in advance to acquire a correlation among a retention time of a reference peak of a reference component, a threshold between a retention time of a first peak of a first component and a retention time of a second peak of a second component, and an index value representing an amount of a component in the sample;

performing chromatography on a sample containing the reference component and a component to be analyzed that is the first component or the second component to acquire the retention time of the reference peak, the index value, and a peak retention time of the component to be analyzed;

determining the threshold based on the correlation, the acquired retention time of the reference peak, and the index value; and

comparing the threshold with the peak retention time of the component to be analyzed to identify whether a peak of the component to be analyzed is the first peak or the second peak.

10. The separation analysis method according to claim 9, comprising:

classifying a plurality of chromatograms obtained by performing chromatography on the plurality of samples prepared in advance for each size of the index value;

obtaining a threshold between the retention time of the first peak and the retention time of the second peak and a first correlation equation of the retention time of the reference peak for each size of the index value to acquire the plurality of first correlation equations;

obtaining a second correlation equation of the index value and a coefficient of a first correlation equation corresponding to the index value from the plurality of first correlation equations; and

acquiring a correlation equation representing the correlation based on the first correlation equation and the second correlation equation.

11. The separation analysis method according to claim 9, comprising:

classifying a plurality of chromatograms obtained by performing chromatography on the plurality of samples prepared in advance for each size of the retention time of the reference peak; and

obtaining the threshold between the retention time of the first peak and the retention time of the second peak and a first correlation equation of the index value for each size of the retention time of the reference peak to acquire a plurality of first correlation equations;

obtaining a second correlation equation of the retention time of the reference peak and a coefficient of the first correlation equation corresponding to the retention time of the reference peak from a plurality of first correlation equations, and

acquiring a correlation equation representing the correlation based on the first correlation equation and the second correlation equation.

12. A non-transitory storage medium storing a separation analysis program that is executable by a computer to perform the method according to any of claims 9 to 11.

FIG.1

EP 4 266 047 A1

FIG.2

# FIG.3

ABSORBANCE

HbA0

HbC

HbD

HbS

PEAK RETENTION TIME

TIME

START OF
MEASUREMENT

PEAK
APPEARANCE

FIG.4

ABSORBANCE

HbA0 (REFERENCE PEAK)

HbD

HbE

TIME

# FIG.5

FIG.6

# FIG.7

```
        ┌─────────────────────────┐
        │          START          │
        └─────────────────────────┘
                     │
S101    ┌─────────────────────────┐
        │         ACQUIRE         │
        │      CHROMATOGRAM       │
        └─────────────────────────┘
                     │
S102    ┌─────────────────────────┐
        │   CLASSIFY CHROMATOGRAM  │
        │    FOR EACH INDEX VALUE  │
        └─────────────────────────┘
                     │
S103    ┌─────────────────────────────┐
        │ DERIVE APPROXIMATE EXPRESSION│
        │    HAVING RETENTION TIME OF   │
        │  REFERENCE PEAK AS VARIABLE   │
        └─────────────────────────────┘
                     │
S104    ┌─────────────────────────────┐
        │  DERIVE CORRELATION EQUATION  │
        │ HAVING INDEX VALUE, RETENTION │
        │ TIME OF REFERENCE PEAK, AND   │
        │   THRESHOLD AS VARIABLES      │
        └─────────────────────────────┘
                     │
S105    ┌─────────────────────────────┐
        │  STORE CORRELATION EQUATION   │
        └─────────────────────────────┘
                     │
        ┌─────────────────────────┐
        │           END           │
        └─────────────────────────┘
```

## FIG.8A
### SAMPLE 1

## FIG.8B
### SAMPLE 2

## FIG.8C
### SAMPLE 3

## FIG.8D
### SAMPLE 4

FIG.9A
SAMPLE 1

FIG.9B
SAMPLE 2

FIG.9C
SAMPLE 3

FIG.9D
SAMPLE 4

# FIG.10A

a=2. 6×10⁻⁶×Tarea+2. 1
R² = 0.9993

# FIG.10B

# FIG.11

START

S111 | ACQUIRE CHROMATOGRAM

S112 | ACQUIRE REFERENCE PEAK RETENTION TIME, PEAK RETENTION TIME OF COMPONENT TO BE ANALYZED, AND INDEX VALUE

S113 | SUBSTITUTE REFERENCE PEAK RETENTION TIME AND INDEX VALUE (TOTAL PEAK AREA) INTO CORRELATION EQUATION TO DERIVE THRESHOLD

S114 | PEAK RETENTION TIME OF COMPONENT TO BE ANALYZED < THRESHOLD?

N

Y

S115 | IDENTIFY PEAK OF THE COMPONENT TO BE ANALYZED AS HbE

S116 | IDENTIFY PEAK OF THE COMPONENT TO BE ANALYZED AS HbD

END

Europäisches
Patentamt

European
Patent Office

Office européen
des brevets

# EUROPEAN SEARCH REPORT

Application Number

EP 23 16 8567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 436 166 A (ITO MASAHITO [JP] ET AL) 25 July 1995 (1995-07-25) | 1,6-8,12 | INV. G01N30/86 |
| A | * claim 6; figure 1 * <br> * column 4, line 62 - column 5, line 29 * | 2-5,9-11 | ADD. G01N30/74 |
| X | US 2016/216240 A1 (KAMATA ETSUHO [JP] ET AL) 28 July 2016 (2016-07-28) | 1,8,12 | |
| A | * paragraphs [0026], [0030] - [0033]; claims 1,6; figures 1,6 * | 2-5,9-11 | |
| A | US 9 792 416 B2 (HEINJE GERD [DE]; JAEGER RAINER [DE]; AGILENT TECHNOLOGIES INC [US]) 17 October 2017 (2017-10-17) <br> * claims 1,3,23,24 * | 1,8,9,12 | |
| A | OH ET AL: "Comprehensive two-dimensional gas chromatography/time-of-flight mass spectrometry peak sorting algorithm", JOURNAL OF CHROMATOGRAPHY A, ELSEVIER, AMSTERDAM, NL, vol. 1179, no. 2, 3 December 2007 (2007-12-03), pages 205-215, XP022413341, ISSN: 0021-9673, DOI: 10.1016/J.CHROMA.2007.11.101 <br> * page 207, right-hand column, line 16 - right-hand column, line 6; figure 1 * | 1,8,9,12 | |
| A | US 2019/086374 A1 (ITO MASAHITO [JP] ET AL) 21 March 2019 (2019-03-21) <br> * claims 1,4,7; figures 1,4 * | 1,8,9,12 | |
| A | US 2022/091078 A1 (SAKAI TAKERO [US]) 24 March 2022 (2022-03-24) <br> * claims 1,5,6; figures 1-4 * | 1,8,9,12 | |

TECHNICAL FIELDS SEARCHED (IPC)

G01N

The present search report has been drawn up for all claims

| Place of search | Date of completion of the search | Examiner |
|---|---|---|
| Munich | 30 August 2023 | Marembert, Vincent |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 23 16 8567

This annex lists the patent family members relating to the patent documents cited in  the above-mentioned European search report.
The members are as contained in the European Patent Office EDP file on
The European Patent Office is in no way liable for these particulars which are merely given for the purpose of information.

30-08-2023

| Patent document cited in search report | | Publication date | Patent family member(s) | | Publication date |
|---|---|---|---|---|---|
| US 5436166 | A | 25-07-1995 | DE | 4204853 A1 | 20-08-1992 |
| | | | JP | 2602366 B2 | 23-04-1997 |
| | | | JP | H04331369 A | 19-11-1992 |
| | | | US | 5436166 A | 25-07-1995 |
| US 2016216240 | A1 | 28-07-2016 | CN | 105518454 A | 20-04-2016 |
| | | | CN | 108508122 A | 07-09-2018 |
| | | | JP | 6065981 B2 | 25-01-2017 |
| | | | JP | WO2015029254 A1 | 02-03-2017 |
| | | | US | 2016216240 A1 | 28-07-2016 |
| | | | WO | 2015029254 A1 | 05-03-2015 |
| US 9792416 | B2 | 17-10-2017 | GB | 2485187 A | 09-05-2012 |
| | | | US | 2012116689 A1 | 10-05-2012 |
| US 2019086374 | A1 | 21-03-2019 | CN | 109541095 A | 29-03-2019 |
| | | | DE | 102018122961 A1 | 21-03-2019 |
| | | | JP | 7012998 B2 | 31-01-2022 |
| | | | JP | 2019056620 A | 11-04-2019 |
| | | | US | 2019086374 A1 | 21-03-2019 |
| US 2022091078 | A1 | 24-03-2022 | JP | 2022052158 A | 04-04-2022 |
| | | | US | 2022091078 A1 | 24-03-2022 |

EPO FORM P0459

For more details about this annex : see Official Journal of the European Patent Office, No. 12/82

**REFERENCES CITED IN THE DESCRIPTION**

**Patent documents cited in the description**

- JP H1079656 A
- JP 2012163476 A